# EUROPÄISCHE PATENTSCHRIFT

(11) **EP 1 542 896 B1**
(45) Veröffentlichungstag und Bekanntmachung des Hinweises auf die Patenterteilung: **15.02.2006**
(21) Anmeldenummer: 03798144.6
(22) Anmeldetag: 30.08.2003
(51) Int. Cl.: B62D 21/11, B60G 3/00

(54) **ANORDNUNG ZUR SCHWINGUNGSDÄMPFUNG IN EINEM FAHRZEUG**
ARRANGEMENT FOR VIBRATION DAMPING IN A VEHICLE
ENSEMBLE AMORTISSEUR DE VIBRATIONS DANS UN VEHICULE

(30) Priorität: 24.09.2002 DE 10244361
(43) Veröffentlichungstag der Anmeldung: 22.06.2005
(73) Patentinhaber: DaimlerChrysler AG, 70567 Stuttgart (DE)
(72) Erfinder: BERGHUS, Jürgen, 75397 Simmozheim (DE); ENDER, Alexander, 89604 Allmendingen (DE); WEBER, Achim, 73325 Köngen (DE); WERGULA, Thomas, 71229 Leonberg (DE)
(86) Internationale Anmeldenummer: PCT/EP2003/009644
(87) Internationale Veröffentlichungsnummer: WO 2004/028883

(56) Entgegenhaltungen:
- EP-A- 0 683 088
- FR-A- 2 813 273
- US-A- 6 003 897

## Beschreibung

Die Erfindung betrifft eine Anordnung zur Schwingungsdämpfung in einem Fahrzeug gemäß dem Oberbegriff des Anspruchs 1. Eine derartige Anordnung ist zum Beispiel aus der FR 2813273 A bekannt.

Es ist allgemein bekannt, bei Fahrzeugen mit Fahrschemelachsen ein Motorlager für eine Brennkraftmaschine vorzusehen. Eine solche Vorrichtung ist in der DE 27 12 083 A1 beschrieben.

Eine Lagerung von Komponenten, wie etwa einer Brennkraftmaschine, am Fahrschemel kann jedoch dazu führen, dass in bestimmten Fahrsituationen der Fahrkomfort leidet, wenn beim Einfedern des Rades die gelagerten Komponenten zu Schwingungen angeregt werden, die in die Karosserie eingeleitet werden.

Der Erfindung liegt die Aufgabe zugrunde, eine Anordnung anzugeben, bei der Komponenten am Fahrschemel direkt oder mittelbar gelagert sind, und die bewirkt, dass eine Anregung der gelagerten Komponenten durch Ein- und Ausfedern des Rades wirkungsvoll gemindert und/oder gedämpft wird.

Die Aufgabe wird durch die Merkmale des Anspruchs 1 gelöst.

Ein Vorteil der Erfindung ist, dass eine Bewegung des Fahrschemels als Reaktion auf das Einfedern oder Ausfedern eines Rades unterbunden oder zumindest stark eingeschränkt wird. Dadurch wird eine unerwünschte Anregung von gelagerten Komponenten vermindert.

Ein weiterer Vorteil besteht darin, dass das Ansprechverhalten der Fahrwerksdämpfung und dadurch das Fahrverhalten verbessert sowie der Fahrkomfort erhöht wird. Weiterhin können Federsteifigkeiten von verschiedenen vorhandenen Lagern verringert werden, was wiederum eine Erhöhung des Fahrkomforts ermöglicht.

Weitere Ausgestaltungen sowie Vorteile der Erfindung sind der Beschreibung und den weiteren Ansprüchen zu entnehmen.

Dabei zeigen:
- Fig. 1: eine schematische Darstellung einer bekannten Anordnung mit Feder-Dämpferbein und Lagerung der Brennkraftmaschine am Fahrschemel ohne Strebe,
- Fig. 2: das Verhalten der Anordnung aus Fig. 1 beim Einfedern des Rades,
- Fig. 3: eine schematische Darstellung einer bevorzugten Anordnung mit Feder-Dämpferbein und Lagerung der Brennkraftmaschine am Fahrschemel mit Strebe gemäß der Erfindung,
- Fig. 4: eine schematische Darstellung einer Anordnung für eine nichtangetriebene Achse, mit Strebenanbindung am Dämpferlager innerhalb eines Federbeins,
- Fig. 5: eine schematische Darstellung einer weiteren bevorzugten Anordnung, mit Strebenanbindung am karosseriefesten Dämpferlager,
- Fig. 6: eine schematische Darstellung einer Weiterbildung der Erfindung mit einer schwingungsdämpfenden Strebe,
- Fig. 7: eine schematische Darstellung einer bevorzugten Weiterbildung mit einer Anbindung an das Federbein,
- Fig. 8: eine schematische Darstellung einer alternativen Ausgestaltung innerhalb des Radhauses,
- Fig. 9: eine schematische Darstellung einer weiteren alternativen Ausgestaltung mit einer Anbindung innerhalb des Motorraumes und
- Fig. 10: eine schematische Darstellung einer bevorzugten weiteren alternativen Ausgestaltung mit Domstrebe.

Die Erfindung ist besonders für Fahrzeuge mit Fahrschemelachsen geeignet. Es können verschiedene Komponenten am Fahrschemel direkt oder mittelbar gelagert sein, z.B. ein Antriebsaggregat und/oder Achskomponenten und/oder andere Aggregate. Die Erfindung wird anhand eines Fahrzeugs beschrieben, bei dem eine Brennkraftmaschine am Fahrschemel gelagert ist; sie ist jedoch nicht auf diese Komponente beschränkt.

In den Figuren sind sich entsprechende oder gleiche Elemente jeweils mit denselben Bezugszeichen bezeichnet.

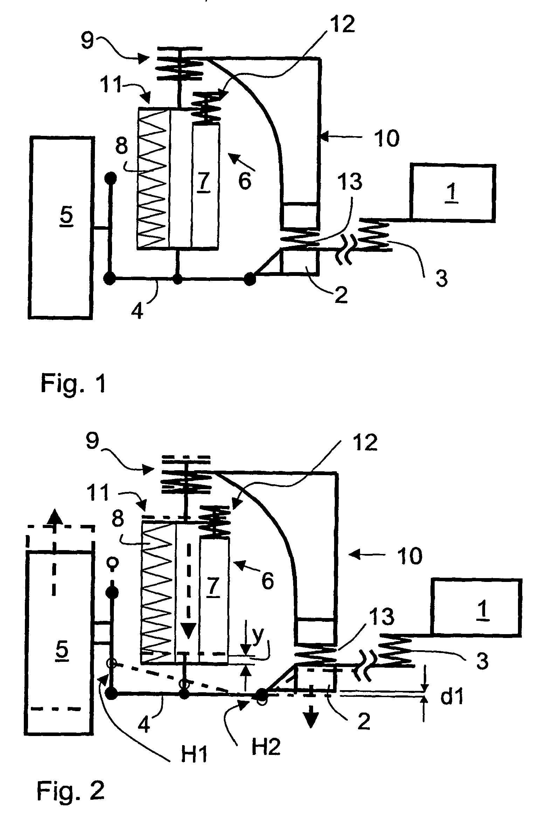

In Fig. 1 ist schematisch ein bekannte Anordnung dargestellt, wie sie z.B. bei einem Vorderachsschemel ausgeführt sein kann. Aus Gründen der Übersichtlichkeit ist nur ein linksseitiger Ausschnitt einer Fahrschemelachse gezeigt, um das Verhalten der Anordnung beim Einfedern eines Rades 5 näher zu erläutern. Eine entsprechende Anordnung setzt sich auch auf der rechten Seite der Figur spiegelbildlich fort.

Insgesamt zeigt die Ansicht ein Radhaus. Oberhalb bzw. seitlich dieses Radhauses ist der Motorraum angeordnet.

Eine gelagerte Komponente 1, etwa eine Brennkraftmaschine, ist über ein Komponentenlager 3 direkt an einem Fahrschemel 2 gelagert. Zwischen Fahrschemel 2 und einem Rad 5 ist ein Lenker 4 angeordnet. Der Lenker 4 kann als Federlenker oder Querlenker ausgebildet sein. Im Radhaus ist zwischen dem Lenker 4 und einer Karosserie 10 ein Feder-Dämpferbein 6 mit einer Feder 8 und einem Dämpfer 7 eingespannt. Feder 8 kann als Luftfeder oder Stahlfeder ausgebildet sein. Das Feder-Dämpferbein 6 ist mit einem Kopflager 9 an der Karosserie 10 gelagert. Das Kopflager 9 weist einen üblichen Zug- und Druckanschlag als obere und untere Begrenzung der Bewegung des Kopflagers 9 auf. Der Dämpfer 7 ist am karosserieseitigen Ende 11 des Feder-Dämpferbeins 6 mit einem Dämpferlager 12 gelagert. Das Dämpferlager 12 weist ebenfalls einen Zug- und Druckanschlag auf. Zwischen Karosserie 10 und Fahrschemel 2 ist ein Fahrschemellager 13 angeordnet.

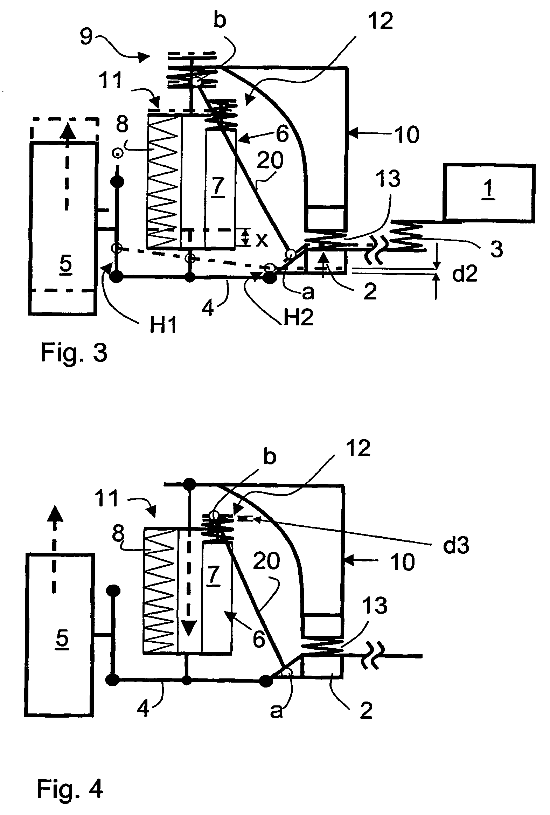

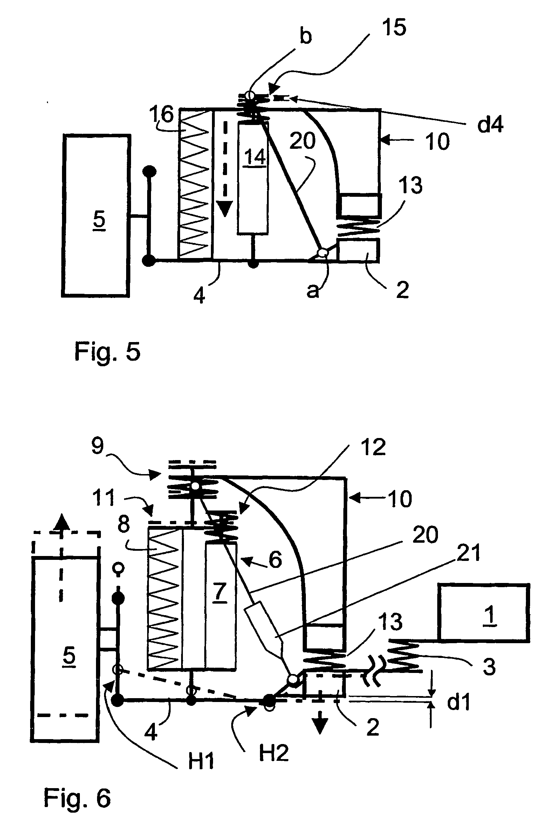

Alternative Ausgestaltungen zur gezeigten Anordnung sind möglich, wie etwa eine Ausführung ohne Kopflager 9 für das Feder-Dämpferbein 6 bzw. den Dämpfer 7 und/oder mit einer Anbindung des Dämpfers 7 direkt an die Karosserie 10 statt an das karosserieseitige Ende 11 des Feder-Dämpferbeins 6 (wie später in Fig. 4 bzw. 5 gezeigt) und/oder eine Lagerung der gelagerten Komponente 1 an der Karosserie 10. Im letzteren Fall können vorteilhaft zumindest die Achsschwingungen vermindert werden.

Fig. 2 erläutert die Situation, wie sich die einzelnen Bestandteile gegeneinander bewegen, wenn das Rad 5 einfedert. Die Bewegung des Rades 5 ist mit einem nach oben gerichteten gestrichelten Pfeil (z-Richtung) angedeutet. Das Rad 5 nimmt den Lenker 4 mit der radseitigen Anbindung mit und bewirkt damit einen Hub des Lenkers 4 um eine Strecke H1. Fahrschemelseitig wird der Lenker 4 jedoch in die Gegenrichtung nach unten ausgelenkt und bewegt sich um eine gegenüber H1 kleinere Strecke H2 in die Gegenrichtung nach unten. Das Feder-Dämpferbein 6 wird insgesamt in dieselbe Richtung wie das Rad 5 angehoben (durch die gestrichelten Linien am Feder-Dämpferbein 6 angedeutet). Der Feder-Dämpferbeinhub y führt im Feder-Dämpferbein 6 zu einer Gegenkraft (gestrichelter Pfeil nach unten) und einer entsprechenden Dämpfung. Durch die Auslenkung des Lenkers 4 nach unten wird auch der Fahrschemel 2 um die Stecke d1 nach unten ausgelenkt, was wiederum auf die Komponente 1 einwirkt. Beim Ausfedern des Rades 5 sind die Bewegungen der einzelnen Bestandteile entsprechend umgekehrt.

Das Einfedern bzw. das Ausfedern des Rades 5 bewirkt aufgrund der Federkräfte mehr oder weniger ungedämpfte Relativbewegungen zwischen Fahrschemel 2 und Karosserie 10, sofern in z-Richtung keine hydraulisch dämpfenden Lager als Fahrschemellager 13 eingesetzt werden. Üblicherweise habe konventionelle Motorlager, die als Komponentenlager 3 einer Brennkraftmaschine fungieren, und Fahrschemellager 13 je nach Materialwahl nur einen geringen Dämpfungsanteil, wodurch sich unerwünschte Schwingungen der gelagerten Komponente 1 ergeben können. Diese wird entsprechend angeregt.

Gemäß der Erfindung werden derartige ungedämpfte oder gedämpfte Relativbewegungen zwischen Fahrschemel 2 und Karosserie 10 durch eine Verbindungsvorrichtung stark vermindert oder sogar unterbunden, welche die Kräfte, die durch Auslenkungen des Rades 5 entstehen, so führt, dass ein geschlossener Kraftflusskreis von Komponenten im Achsverbund gebildet wird.

Vorzugsweise bewirkt die Verbindungsvorrichtung, dass eine Abstandsänderung zwischen einem Lager 9, 12 des Feder-Dämpferbeins 6 und dem Fahrschemel 2 auf geringe Änderungen begrenzt oder ganz eliminiert wird. Im gezeigten Ausführungsbeispiel besteht die Verbindungsvorrichtung aus einer Strebe 20.

Die Auslenkungen am Lager 9 und am Fahrschemel 2 sind entgegengesetzt gerichtet, wobei deren Amplitude unter anderem von der jeweiligen Lagersteifigkeit des Lagers 9 und der Fahrschemellager 13 abhängig ist.

Fig. 3 veranschaulicht ein Wirkprinzip der Erfindung. Zwischen dem Kopflager 9 des Feder-Dämpferbeins 6 und dem Fahrschemel 2 ist als eine Verbindungsvorrichtung eine Strebe 20 angeordnet, welche eine Abstandsänderung zwischen Lager 9, 12 und Fahrschemel 2 begrenzt oder eliminiert. In diesem Ausführungsbeispiel ist die Strebe 20 als eine feste Stange ausgebildet. Die Strebe hat einen oberen und unteren Endpunkt a, b und fixiert den Abstand zwischen Kopflager 9 und Fahrschemel 2. Daraus folgt, dass beim Einfedern des Rades 5 (gestrichelter Pfeil) nunmehr die Relativbewegung des Fahrschemels 2 in z-Richtung entgegengesetzt der in Fig. 2 beschriebenen Bewegung erfolgt. Der Fahrschemel 2 lenkt nicht mehr nach unten aus, sondern bewegt sich allenfalls um eine Strecke d2 nach oben in z-Richtung, deren Größe im wesentlichen von einer Lagersteifigkeit an den Strebenenden a, b abhängt. Ebenso ist eine fahrschemelseitige Auslenkung H2 des Lenkers 4 nunmehr nach oben gerichtet. Weiterhin vergrößert sich der Dämpferhub, erkennbar an der Auslenkung x, welche größer sein kann als der Hub y aus Fig. 2. Die Folge davon ist eine höhere Raddämpfung sowie ein besseres Ansprechverhalten des Dämpfers 7. Damit ist auch die in Fig. 2 erkennbare einander entgegengesetzte Auslenkung am Kopflager 9 und am Fahrschemel 2 unterbunden.

Die Anordnung der Verbindungsvorrichtung bzw. der Strebe 20 zwischen Fahrschemel 2 und Kopflager 9 bewirkt eine Parallelschaltung der Federsteifigkeiten aller zwischen den Befestigungspunkten a, b der Strebe 20 angeordneten Lager. Diese Parallelschaltung ergibt in der gezeigten Anordnung demnach eine Summierung der Federsteifigkeiten von Fahrschemellager 13, Kopflager 9, Dämpferlager 12 und Feder 8. Es können auch weitere Lager vorgesehen sein, deren Federsteifigkeiten dann entsprechend dazu addiert werden können. Durch diese Parallelschaltung verändert sich die Eigenfrequenz des gesamten Systems. Es besteht daher ein erhöhtes Potential zur Schwingungsdämpfungs- und Komfortsteigerung, da einzelne Lagersteifigkeiten der parallel geschalteten Lager 13, 9, 12, 8 im Vergleich zu einer Situation ohne Verbindungsvorrichtung reduziert werden können.

Durch Radkraftschwankungen verursachte Einleitungskräfte werden am Kopflager 9 reduziert. Dadurch wird vorteilhaft eine geringere Geräuscheinleitung in das Fahrzeug und ein besserer Abrollkomfort erzielt. Weiterhin können die Steifigkeiten der Lager gezielt variiert werden, um eine optimierte Abstimmung der Lager zu erreichen.

Ein etwaiges Setzverhalten des Fahrschemellagers 13 in z-Richtung, z.B. mit zunehmender Betriebsdauer, ist nunmehr vernachlässigbar. Dies führt zu einer Reduzierungen von Knickwinkelschwankungen im Antriebsstrang, insbesondere von Schwankungen der Gelenkwellenknickwinkel.

Durch die Verbindungsvorrichtung tritt kein Verlust an erreichbarem Dämpferhub ein. Die Masse der gelagerten Komponente 1 wirkt als zusätzliche träge Masse. Sofern ein nicht dargestelltes Lenkgetriebe am Fahrschemel 2 befestigt ist, werden zusätzlich noch etwaige Lenkraddrehschwingungen reduziert, die andernfalls auftreten können.

Eine weitere günstige Ausgestaltung der Erfindung für eine Anwendung an einem Federbein ohne Kopflager ist in Fig. 4 dargestellt. Eine Komponente 1 kann am Fahrschemel 2 gelagert sein oder nicht. Statt über ein Kopflager 9 ist das Feder-Dämpferbein 6 nunmehr direkt mit der Karosserie 10 verbunden.

Eine Strebe 20 ist hier als Verbindungsvorrichtung zwischen Fahrschemel 2 und dem Dämpferlager 12 des Dämpfers 7 des Feder-Dämpferbeins 6 angeordnet. Der obere Endpunkt b der Strebe 20 am Dämpferlager 12 wird am Zuganschlag am oberen Ende des Dämpferlagers 12 befestigt und steht dabei in Verbindung mit der Kolbenstange des Dämpfers 7. Durch die Anordnung der Strebe 20 zwischen Fahrschemel 2 und Dämpferlager 12 verringern sich die Zugkräfte in der Strebe 20 wegen des "fehlenden" Beitrags der Feder 8. Der Fahrschemel 2 kann wegen der auftretenden Dämpferkräfte zwar wieder nach unten bewegen, allerdings beaufschlagen diese Bewegungen den Raddämpfer 7 zusätzlich und werden daher bedämpft. Dies ist dadurch erkennbar, dass sich ein zusätzlicher Dämpferhub d3 im oberen Bereich des Dämpfers 7 einstellt.

Etwaige in die Karosserie 10 eingeleiteten dynamischen Kraftspitzen werden reduziert, was eine vorteilhafte Verbesserung der Abrollgeräusche mit sich führt.

Die in den oben angeführten Ausführungsbeispielen genannten Vorteile gelten entsprechend für diese Anordnung.

Eine weitere günstige Ausgestaltung einer Anwendung für einen Dämpfer 14 ist in Fig. 5 dargestellt. Statt eines Feder-Dämpferbeines 6 ist nunmehr eine separate Feder 16 vorgesehen, sowie ein separater Dämpfer 14, der mit einem Dämpferlager 15 an der Karosserie 10 gelagert ist. Wie in Fig. 4 steht hier ein zusätzlicher Dämpferhub d4 durch die Anordnung der Strebe 20 zwischen Fahrschemel 2 und der Kolbenstange des Dämpfers 14 zur Verfügung.

Die Verbindungsvorrichtung, insbesondere in Gestalt einer Strebe 20, bietet weiterhin die Möglichkeit, die einzelnen durch die Verbindungsvorrichtung, bzw. Strebe 20, parallel geschalteten Federsteifigkeiten jeweils weicher zu machen, was wiederum den Komfort verbessert. Weiterhin ergibt sich in einer Ausführung gemäss Fig. 3, sofern die Federsteifigkeiten kleiner werden, zusätzlich ein Potential für eine kostengünstige Lagerauslegung des Lagers 3 für die lagernden Komponenten 1, insbesondere für ein Motorlager.

Die Strebe 20 ist bevorzugt ein fester Stab, der entsprechend stabil ausgelegt ist. So kann dessen Federsteifigkeit zumindest so groß vorgesehen werden, wie die Federsteifigkeiten der Lager 8, 9, 12, 13, welche von diesem parallel geschaltet werden. Die Strebe 20 wird vorzugsweise mit elastischen Elementen am Kopflager 9 und am Fahrschemel 2 angebunden. Weiterhin kann die Strebe auch vorgespannt werden, um Traglasten der Fahrschemellager 13 und Kopflager 9 zu variieren.

Vorhandene Lager werden weniger belastet, was sich günstig auf deren Lebensdauer auswirkt. Ebenso werden Einleitungskräfte in die Karosserie 10 reduziert mit der Folge, dass auch die Lebensdauer der Karosserie günstig beeinflusst wird.

Ein zusätzlicher Vorteil einer Anordnung mit derartigen Verbindungsvorrichtung ist darin zu sehen, dass im Crashfall über die Strebe 20 zusätzlich kinetische Energie in die Karosserie 10 eingeleitet werden kann. Bei einem Crashfall im Frontbereich des Fahrzeugs wird der Vorbau deformiert, und der Fahrschemel 2 bewegt sich nach hinten. Ebenso bewegt sich die Strebe 20 nach hinten, so dass kinetische Energie vom unteren Bereich in den oberen Bereich der Karosserie 10 transportiert werden kann.

Eine günstige Weiterbildung der Erfindung ist in Fig. 6 dargestellt. Die Anordnung entspricht im wesentlichen der in Fig. 3. Zusätzlich zu der dortigen Anordnung weist die Verbindungsvorrichtung Mittel 21 zur Schwingungsdämpfung auf, insbesondere kann eine Strebe 20 als Dämpfer ausgeführt sein. Dadurch ist der Fahrschemel 2 wiederum an das Kopflager 9 angebunden. Die entgegengesetzten Auslenkungen d1 am Fahrschemellager 13 und am Kopflager 9 werden aber in diesem Fall bedämpft. Der Dämpferhub kann z.B. durch Veränderungen der Lagersteifigkeit des Kopflagers 9 und des Fahrschemellagers 13 beeinflusst werden.

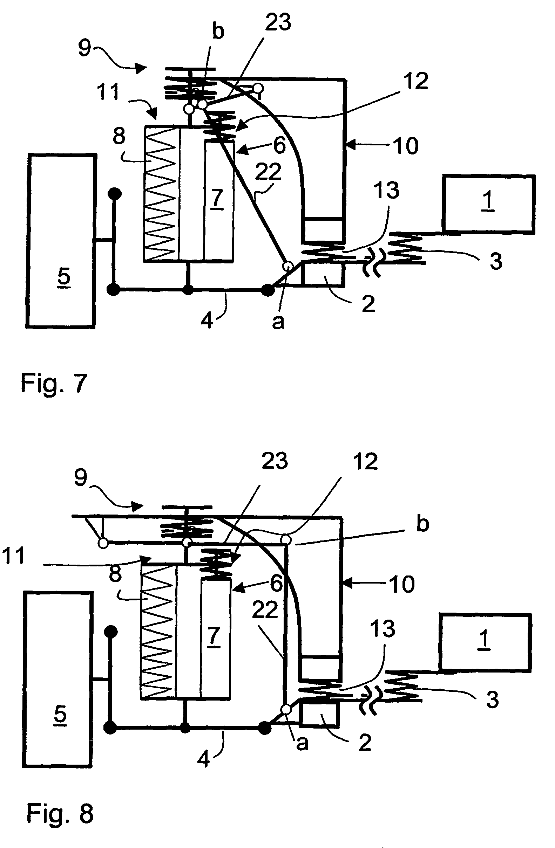

Eine weitere bevorzugte Ausgestaltung der Erfindung ist in Fig. 7 abgebildet. Dort ist eine querkraftfreie Anbindung der Verbindungsvorrichtung an das Feder-Dämpferbein 6 dargestellt. Eine Zusatzschwinge 23 ist karosserieseitig innerhalb des Radhauses der Karosserie 10 abgestützt und verbindet die Karosserie 10 mit dem Feder-Dämpferbein 6. Eine Strebe 22 ist nahe des Kopflagers 9 mit der Zusatzschwinge 23 verbunden. Das Feder-Dämpferbein 6 wird auf diese Weise vor unerwünschten zusätzlichen Federbeinquerkräften geschützt.

Auch Fig. 8 zeigt eine bevorzugte querkraftfreie Ausgestaltung der Erfindung. Dort ist eine alternative Anbindung einer Strebe 22 an das Feder-Dämpferbein 6 dargestellt. Eine Zusatzschwinge 23 ist karosserieseitig innerhalb des Radhauses der Karosserie 10 abgestützt. Die Strebe 22 ist dabei nahe des Radhauses der Karosserie 10 mit der Zusatzschwinge 23 verbunden. Die Zusatzschwinge 23 verbindet die Strebe 22 mit dem Kopflager 9.

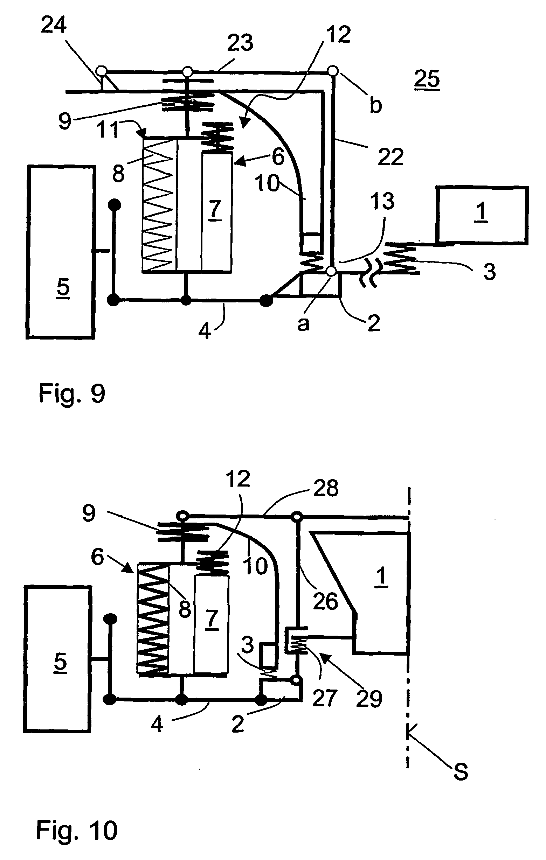

Eine weitere bevorzugte Ausgestaltung der Erfindung ist in Fig. 9 abgebildet. Dort ist eine querkraftfreie Anbindung einer Strebe 22 an das Feder-Dämpferbein 6 dargestellt, bei der eine Zusatzschwinge 23 karosserieseitig innerhalb des Motorraumes 25 abgestützt ist. Die Strebe 22 ist dabei nahe des Radhauses der Karosserie 10 mit der Zusatzschwinge 23 verbunden. Die Zusatzschwinge 23 verbindet die Strebe 22 mit dem Kopflager 9 und verläuft oberhalb des Kopflagers 9. Gegen die Karosserie 10 ist die Zusatzschwinge 23 mit einem Widerlager 24 abgestützt. Diese Variante ist kompakt und erlaubt ein günstiges Packaging des Systems, indem freies Volumen im Motorraum 25 genutzt wird.

Fig. 10 zeigt eine besonders bevorzugte Ausgestaltung der Verbindungsvorrichtung, die eine Domstrebe 28 und auf jeder Seite der Achse eine Strebe 26 umfasst. Eine gelagerte Komponente 1 kann direkt auf einem Fahrschemel 2 gelagert sein oder wie dargestellt, mit einem Lager 27 an der Strebe 26, wobei an der Strebe 26 eine entsprechende Lageraufnahme 29 ausgebildet ist. Das Lager 27 weist vorzugsweise Federungs- und Dämpfungseigenschaften auf.

Die Domstrebe 28 verläuft zwischen Kopflagern 9 eines Feder-Dämpferbeins 6 der Achse. Die Domstrebe 28 ist nicht karosseriefest, sondern verbindet die beiden Kopflager 9, die auf beiden Seiten der Achse angeordnet sind. Die Strebe 26 verläuft im Motorraum 25 vom Fahrschemel 2 nach oben zur Domstrebe 28 und ist dort mit dieser verbunden. Die gezeigte Anordnung setzt sich dabei spiegelbildlich nach rechts fort. Günstig ist, dass der Dämpfer 7 des Feder-Dämpferbeins 6 nicht mit Querkräften beaufschlagt wird.

Ein Vorteil der Verbindungsvorrichtung, insbesondere der Strebe 20, 22, 26 liegt darin, dass alle durch die Radbewegung eingeleiteten Kräfte besser innerhalb des Achsverbundes, vorzugsweise aus Lenker 4, insbesondere Querlenker, Feder-Dämpferbein 6, Verbindungsvorrichtung und Fahrschemel 2, abgestützt werden und deshalb an den karosserieseitigen Anbindungsstellen des Achsverbundes deutlich weniger Kräfte wirken.

### Bezugszeichenliste

- 1: zu lagernde Komponente
- 2: Fahrschemel
- 3: Motorlager
- 4: Lenker
- 5: Rad
- 6: Feder-Dämpferbein
- 7: Dämpfer des Feder-Dämpferbeins
- 8: Feder des Feder-Dämpferbeins
- 9: Kopflager
- 10: Karosserie
- 11: karosserieseitiges Ende des Feder-Dämpferbeins
- 12: Dämpferlager des Feder-Dämpferbeins
- 13: Fahrschemellager
- 14: Dämpfer
- 15: Dämpferlager
- 16: Feder

- 20: Strebe
- 21: Mittel zur Schwingungsdämpfung
- 22: Strebe
- 23: Zusatzschwinge
- 24: Widerlager
- 25: Motorraum
- 26: Strebe
- 27: Lager
- 28: Domstrebe
- 29: Lageraufnahme

## Patentansprüche

1. Anordnung zur Schwingungsdämpfung bei einem Fahrzeug mit einer Karosserie (10), wobei einer Achse ein Fahrschemel (2) zugeordnet ist, an dem eine zu lagernde Komponente (1) gelagert ist, sowie der Achse zugeordnete Räder (5) mit den Rädern (5) zugeordneten Lenkern (4) und Dämpfungsvorrichtungen (6, 14),
**dadurch gekennzeichnet,**
**dass** zum Vermindern von Relativbewegungen zwischen der Karosserie (10) und dem Fahrschemel (2) eine Verbindungsvorrichtung vorgesehen ist, mit der der Fahrschemel (2) an ein Lager (9, 12) der Dämpfungsvorrichtung (6, 14) angebunden ist.

2. Vorrichtung nach Anspruch 1,
**dadurch gekennzeichnet,**
**dass** durch die Verbindungsvorrichtung mindestens zwei Lager (8, 9, 12, 13, 15) aus der Gruppe von Kopflager (9) eines Feder-Dämpferbeins (6), Dämpferlager (12, 15) eines Dämpfers (14), Feder (8) des Feder-Dämpferbeins (6), Fahrschemellager (13) parallel geschaltet sind.

3. Vorrichtung nach Anspruch 1 oder 2,
**dadurch gekennzeichnet,**
**dass** die Verbindungsvorrichtung den Fahrschemel (2) im wesentlichen starr an ein der Dämpfungsvorrichtung (6, 14) zugeordnetes Lager (9, 12, 15) anbindet.

4. Vorrichtung nach Anspruch 3,
**dadurch gekennzeichnet,**
**dass** die Verbindungsvorrichtung den Fahrschemel (2) an das Kopflager (9) anbindet.

5. Vorrichtung nach Anspruch 3,
**dadurch gekennzeichnet,**
**dass** die Verbindungsvorrichtung den Fahrschemel (2) an das Dämpferlager (12, 15) anbindet.

6. Vorrichtung nach einem der vorangegangenen Ansprüche,
**dadurch gekennzeichnet,**
**dass** die Verbindungsvorrichtung im wesentlichen querkraftfrei an die Dämpfungsvorrichtung (6, 14) angebunden ist.

7. Vorrichtung nach einem der vorangegangenen Ansprüche,
**dadurch gekennzeichnet,**
**dass** die Verbindungsvorrichtung eine starre Strebe (20, 22, 26) umfasst.

8. Vorrichtung nach Anspruch 7,
**dadurch gekennzeichnet,**
**dass** die Verbindungsvorrichtung eine oder mehrere Zusatzschwingen (23, 24) umfasst, welche die Strebe (20, 22, 26) mittelbar mit dem Kopflager (9) oder Dämpferlager (12) verbindet.

9. Vorrichtung nach Anspruch 8,
**dadurch gekennzeichnet,**
**dass** die Strebe (22) karosserieseitig innerhalb des Motorraumes abgestützt ist.

10. Vorrichtung nach Anspruch 8,
**dadurch gekennzeichnet,**
**dass** die Strebe (22) karosserieseitig innerhalb des Radhauses abgestützt ist.

11. Vorrichtung nach Anspruch 7 oder 8,
**dadurch gekennzeichnet,**
**dass** die Strebe (20, 22, 26) mit elastischen Lagern an den Strebenenden (a, b) versehen ist.

12. Vorrichtung nach einem der Ansprüche 7 bis 9,
**dadurch gekennzeichnet,**
**dass** die Strebe (20, 22, 26) unter Vorspannung gesetzt ist.

13. Vorrichtung nach zumindest einem der vorangegangenen Ansprüche,
**dadurch gekennzeichnet,**
**dass** die Strebe (20, 22, 26) Mittel zur Schwingungsdämpfung (21) aufweist.

14. Vorrichtung nach einem der vorangegangenen Ansprüche,
**dadurch gekennzeichnet,**
**dass** die Verbindungsvorrichtung eine Domstrebe (28) umfasst, welche zwischen Kopflagern (9, 12) einer Achse verläuft und welche auf jeder Seite einer Symmetrielinie (S) eine Strebe (26) mit dem Fahrschemel (2) verbindet.

15. Vorrichtung nach Anspruch 14,
**dadurch gekennzeichnet,**
**dass** die zu lagernde Komponente (1) an einer Lageraufnahme (29) der Strebe (26) gelagert ist.

## Claims

1. Arrangement for vibration damping in a vehicle having a body (10), in which one axle is assigned a chassis auxiliary frame (2), on which a component (1) which is to be mounted is mounted, as well as wheels (5) assigned to the axle with damping devices (6, 14) and links (4) assigned to the wheels (5), **characterized in that** a connecting device, by means of which the chassis auxiliary frame (2) is linked to a bearing (9, 12) of the damping device (6, 14), is provided for the purpose of reducing relative movements between the body (10) and the chassis auxiliary frame (2).

2. Apparatus according to Claim 1, **characterized in that** at least two bearings (8, 9, 12, 13, 15) selected from the group consisting of head bearing (9) of a spring-and-damper strut (6), damper bearings (12, 15) of a damper (14), spring (8) of the spring-and-damper strut (6), chassis auxiliary frame bearing (13) are connected in parallel by the connecting device.

3. Apparatus according to Claim 1 or 2, **characterized in that** the connecting device links the chassis auxiliary frame (2) substantially rigidly to a bearing (9, 12, 15) assigned to the damping device (6, 14).

4. Apparatus according to Claim 3, **characterized in that** the connecting device links the chassis auxiliary frame (2) to the head bearing (9).

5. Apparatus according to Claim 3, **characterized in that** the connecting device links the chassis auxiliary frame (2) to the damper bearing (12, 15).

6. Apparatus according to one of the preceding claims, **characterized in that** the connecting device is linked to the damping device (6, 14) substantially without any transverse forces.

7. Apparatus according to one of the preceding claims, **characterized in that** the connecting device comprises a rigid rod (20, 22, 26).

8. Apparatus according to Claim 7, **characterized in that** the connecting device comprises one or more additional rockers (23, 24), which indirectly connects the rod (20, 22, 26) to the head bearing (9) or damper bearing (12).

9. Apparatus according to Claim 8, **characterized in that** the rod (22), on the body side, is supported within the engine compartment.

10. Apparatus according to claim 8, **characterized in that** the rod (22), on the body side, is supported within the wheel house.

11. Apparatus according to Claim 7 or 8, **characterized in that** the rod (20, 22, 26) is provided with elastic bearings at the rod ends (a, b).

12. Apparatus according to one of Claims 7 to 9, **characterized in that** the rod (20, 22, 26) is placed under prestress.

13. Apparatus according to at least one of the preceding claims, **characterized in that** the rod (20, 22, 26) has vibration-damping means (21).

14. Apparatus according to one of the preceding claims, **characterized in that** the connecting device comprises a dome rod (28), which runs between head bearings (9, 12) of one axle and which connects a rod (26) to the chassis auxiliary frame (2) on each side of a line of symmetry (S).

15. Apparatus according to Claim 14, **characterized in that** the component (1) which is to be mounted is mounted on a bearing receiving part (29) of the rod (26).

## Revendications

1. Arrangement pour amortir les vibrations sur un véhicule muni d'une carrosserie (10), un faux-châssis (2) étant associé à un essieu sur lequel est supporté un composant à supporter (1), ainsi que les roues (5) associées à l'essieu avec les bras oscillants transversaux (4) et les dispositifs d'amortissement (6, 14) associés aux roues, **caractérisé en ce que** pour éviter des mouvements relatifs entre la carrosserie (10) et le faux-châssis (2), il est prévu un dispositif de liaison avec lequel le faux-châssis (2) est attaché à un support (9, 12) du dispositif d'amortissement (6, 14).

2. Dispositif selon la revendication 1, **caractérisé en ce qu'**au moins deux supports (8, 9, 12, 13, 15) du groupe composé de : support de tête (9) d'un amortisseur à ressort (6), support d'amortisseur (12, 15) d'un amortisseur (14), ressort (8) de l'amortisseur à ressort (6), support de faux-châssis (13) sont disposés en parallèle par le biais du dispositif de liaison.

3. Dispositif selon la revendication 1 ou 2, **caractérisé en ce que** le dispositif de liaison relie essentiellement de manière rigide le faux-châssis (2) avec un support (9, 12, 15) associé au dispositif d'amortissement (6, 14).

4. Dispositif selon la revendication 3, **caractérisé en ce que** le dispositif de liaison relie le faux-châssis (2) au support de tête (9).

5. Dispositif selon la revendication 3, **caractérisé en ce que** le dispositif de liaison relie le faux-châssis (2) au support d'amortisseur (12, 15).

6. Dispositif selon l'une des revendications précédentes, **caractérisé en ce que** le dispositif de liaison est relié au dispositif d'amortissement (6, 14) pour l'essentiel sans forces transversales.

7. Dispositif selon l'une des revendications précédentes, **caractérisé en ce que** le dispositif de liaison comprend une jambe de force rigide (20, 22, 26).

8. Dispositif selon la revendication 7, **caractérisé en ce que** le dispositif de liaison comprend une ou plusieurs bielles oscillantes (23, 24) supplémentaires qui relient indirectement la jambe de force (20, 22, 26) avec le support de tête (9) ou le support d'amortisseur (12).

9. Dispositif selon la revendication 8, **caractérisé en ce que** la jambe de force (22), du côté de la carrosserie, est soutenue à l'intérieur du compartiment moteur.

10. Dispositif selon la revendication 8, **caractérisé en ce que** la jambe de force (22), du côté de la carrosserie, est soutenue à l'intérieur du passage de roue.

11. Dispositif selon la revendication 7 ou 8, **caractérisé en ce que** la jambe de force (20, 22, 26) est munie de supports élastiques au niveau des extrémités de la jambe de force (a, b).

12. Dispositif selon l'une des revendications 7 à 9, **caractérisé en ce que** la jambe de force (20, 22, 26) est placée sous précontrainte.

13. Dispositif selon au moins l'une des revendications précédentes, **caractérisé en ce que** la jambe de force (20, 22, 26) présente des moyens pour amortir les vibrations (21).

14. Dispositif selon l'une des revendications précédentes, **caractérisé en ce que** le dispositif de liaison comprend une jambe de force à dôme (28) qui s'étend entre les supports de tête (9, 12) d'un essieu et qui relie une jambe de force (26) avec le faux-châssis (2) de chaque côté d'une ligne de symétrie (S).

15. Dispositif selon la revendication 14, **caractérisé en ce que** les composants à supporter (1) sont supportés sur un logement support (29) de la jambe de force (26).
